# EUROPÄISCHE PATENTSCHRIFT

(11) **EP 1 820 260 B1**
(45) Veröffentlichungstag und Bekanntmachung des Hinweises auf die Patenterteilung: **30.06.2010**
(21) Anmeldenummer: 05785632.0
(22) Anmeldetag: 24.09.2005
(51) Int. Cl.: H02P 3/04, H02P 3/22

(54) **ANTRIEB UND VERFAHREN ZUM STEUERN DES ENERGIEFLUSSES BEI EINEM ANTRIEB**
DRIVE AND METHOD FOR CONTROLLING THE FLOW OF ENERGY IN A DRIVE
MECANISME D'ENTRAINEMENT ET PROCEDE POUR ASSURER LA COMMANDE DU FLUX D'ENERGIE DANS UN MECANISME D'ENTRAINEMENT

(30) Priorität: 30.11.2004 DE 102004057915
(43) Veröffentlichungstag der Anmeldung: 22.08.2007
(73) Patentinhaber: SEW-EURODRIVE GmbH & Co. KG, 76646 Bruchsal (DE)
(72) Erfinder: PRAUTZSCH, Harald, D-76139 Karlsruhe (DE)
(86) Internationale Anmeldenummer: PCT/EP2005/010350
(87) Internationale Veröffentlichungsnummer: WO 2006/058574

(56) Entgegenhaltungen:
- DE-A1- 3 735 621
- DE-A1- 19 734 405
- US-A- 5 070 290

## Beschreibung

Die Erfindung betrifft ein Antrieb und Verfahren zum Steuern des Energieflusses bei einem Antrieb.

Aus der DE 197 04 226 ist ein Umrichtermotor bekannt, bei dem ein Umrichter auf den Anschlusskasten des Motors aufgesetzt ist.

Aus der DE 197 34 405 A1 ist ein Verfahren bekannt, bei dem Energie des Zwischenkreises an die Bremsspule eines Motors abgeführt wird, wodurch ein Bremswiderstand einsparbar ist.

Durch Kombination der beiden Schriften ist ein besonders kompakter Antrieb herstellbar, der keinen Bremswiderstand benötigt, also wenig Bauraum benötigt, und trotzdem im generatorischen Betrieb, also auch beispielsweise bei Hubwerken, einsetzbar ist. Die Energie ist im generatorischen Fall nämlich an die Bremsspule abführbar. Allerdings kann dies nur in begrenztem Umfang geschehen, weil die Bremsspule nur bis zu einer kritischen Temperatur betreibbar ist.

Der Erfindung liegt die Aufgabe zugrunde, einen Antrieb für hohe Leistung kompakt weiterzubilden.

Erfindungsgemäß wird die Aufgabe bei der nach den in Anspruch 1 angegebenen Merkmalen gelöst.

Wesentliche Merkmale der Erfindung bei dem Antrieb sind, dass der Antrieb zumindest einen Motor, zumindest einen Energiespeicher und mindestens zwei mit diesem Energiespeicher verbundenen Verbrauchern und/oder Speichern umfasst,
wobei der Motor in zumindest generatorischer oder motorischer Betriebsart betreibbar ist,
wobei bei in generatorischer Betriebsart betriebenem Motor Energiefluss vom Motor zum Energiespeicher vorgesehen ist,
wobei bei in motorischer Betriebsart betriebenem Motor Energiefluss vom Energiespeicher zum Motor vorgesehen ist,
wobei Energiefluss aus dem Energiespeicher im Wesentlichen mindestens zwei Verbrauchern und/oder Speichern jeweils unabhängig gesteuert zuführbar ist, insbesondere nach Überschreitung einer kritische Energiemenge im Energiespeicher.

Von Vorteil ist dabei, dass nicht nur ein Verbraucher sondern sogar zwei Verbraucher vorsehbar sind. Somit ist mehr Energiefluss vom Energiespeicher abführbar. Außerdem ist durch die Möglichkeit der separaten Ansteuerung eine bessere Steuerung und Verteilung des Energieflusses ermöglicht. Wenn also im generatorischen Betrieb der Energiespeicher in die Nähe seiner Kapazitätsgrenze gelangt oder eine seiner Größen unzulässig hohe Werte erreicht, ist der Energiespeicher schützbar durch die Abfuhr an sogar zwei Verbraucher. Dieses Abführen ist kontrolliert ausführbar und separat. Also ist es nun auch ermöglicht, die technischen Parameter der beiden Verbraucher zu berücksichtigen sowie Werte von Messgrößen und/oder Modellgrößen, wie Strom, Temperatur oder auch Spannung.

Bei einer vorteilhaften Ausgestaltung ist ein Zwischenkreiskondensator als Energiespeicher vorgesehen, ein erster Verbraucher ist ein Bremswiderstand und ein zweiter Verbraucher ist eine Bremsspule. Von Vorteil ist dabei, dass die Bremsspule stets aus dem Zwischenkreis eines Umrichters versorgbar ist und somit stets Energiefluss zugeleitet bekommt. Im Fall der Überschreitung der kritischen Werte im Energiespeicher ist dann der an die Bremsspule zugeführte Energiefluss, also auch Strom, erhöhbar. Dies kann so lange erfolgen, bis die Bremsspule zu heiß wird, also einen kritischen maximal zulässigen Wert an Temperatur erreicht. Gleichzeitig ist weiterer Energiefluss an den Bremswiderstand abführbar. Auf diese Weise ist es bei der Erfindung ermöglicht, dass ein sowieso vorhandenes und ständig zu bestromendes Bauteil, wie die Bremsspule, auch zur Abfuhr von mehr Energie aus dem Zwischenkreis verwendbar ist. Denn solange der Motor unverhindert drehen soll und die elektromagnetisch betätigbare Bremse daher gelüftet ist, muss die Bremsspule bestromt werden. Da die Versorgung der Bremsspule aus dem Zwischenkreis, also beispielsweise aus dem Zwischenkreiskondensator eines spannungsgeführten Umrichters, ausgeführt wird, ist ein Regler vorhanden, der pulsweitenmoduliert betrieben wird und die Spannung für die Bremsspule derart stellt, dass der gewünschte Sollstrom zum Lüften der Bremse erreicht wird. Wenn die Spannung am Zwischenkreiskondensator einen kritischen Wert überschreitet, also das zulässige Fassungsvermögen des Zwischenkreiskondensators nahe liegt, wird die Pulsweite derart verändert, dass an der Bremsspule eine größere Spannung anliegt und der Strom entsprechend größer wird. Es kann sogar kurzzeitig die volle Zwischenkreisspannung an die Bremsspule angelegt werden. Dies kann selbstverständlich nur so lange erfolgen, bis die Temperatur der Bremsspule keinen kritischen Wert überschreitet, wobei dann die Bremsspule zerstört würde. Bei vielen Anwendungsfällen ist aber die Zwischenkreisspannung derart schnell abgebaut und der generatorische Betrieb beendet, dass die Bremsspule die kritische Temperatur nicht erreicht. Bei der Erfindung wird dies besonders klar, weil ja der zweite Verbraucher zusätzlich ab Überschreiten der kritischen Energie im Energiespeicher ebenfalls Energiefluss zugeführt bekommt und somit den Energiespeicher schützt.

Bei einer vorteilhaften Ausgestaltung sind Bremswiderstand und Bremsspule über jeweilige Schalter S1, S2 aus dem Zwischenkreiskondensator versorgbar. Von Vorteil ist dabei, dass Halbleiterschalter, wie IGBT oder dergleichen, verwendbar sind und somit auch schnell getaktete Verfahren oder auch Pulsweitenmodulationsverfahren anwendbar sind. Auf diese Weise lässt sich dann sogar der dem Verbraucher zugeführte Strom regeln.

Bei einer vorteilhaften Ausgestaltung ist der der Bremsspule zugeordnete Schalter pulsweitenmoduliert betreibbar. Von Vorteil ist dabei, dass insbesondere der Strom für die Bremsspule genau regelbar ist und somit ein guter Temperaturmodellwert für die Bremsspule bestimmbar ist.

Bei einer vorteilhaften Ausgestaltung sind die Ansteuersignale für die Schalter von Ansteuerschaltungen ST1, ST2 erzeugbar, wobei
- technische Parameter des jeweiligen Verbrauchers
- und Messwerte des Stromes durch den jeweiligen Verbraucher berücksichtigbar sind
- und/oder ein bestimmter Modellwert für Temperatur des Verbrauchers bildbar und/oder berücksichtigbar ist.
Von Vorteil ist dabei, dass eine optimierte Steuerung des Energieflusses ausführbar ist.

Bei einer vorteilhaften Ausgestaltung ist der Antrieb als Umrichtermotor ausgeführt, wobei der Bremswiderstand innerhalb des Umrichtermotors vorgesehen ist und seine Wärme über das Motorgehäuse an die Umgebung abführbar ist. Von Vorteil ist dabei, dass kein weiteres Gehäuse für den Bremswiderstand notwendig ist und die Betriebszeit bei generatorischer Betriebsart verlängert ist und/oder die Wärmeleistung des Antriebs im generatorischen Betrieb vergrößerbar ist.

Bei einer vorteilhaften Ausgestaltung ist der Antrieb als Umrichtermotor ausgeführt, wobei der Bremswiderstand außerhalb des Umrichtermotors vorgesehen ist. Von Vorteil ist dabei, dass erhebliche Wärmemengen zusätzlich über den Bremswiderstand abführbar sind.

Wesentliche Merkmale der Erfindung bei dem Verfahren sind, dass das Verfahren zum Steuern des Energieflusses bei einem Antrieb vorgesehen ist, umfassend zumindest einen Motor, zumindest einen Energiespeicher und mindestens zwei mit diesem Energiespeicher verbundenen Verbrauchern und/oder Energiespeichern,
wobei der Motor in zumindest generatorischer oder motorischer Betriebsart betreibbar ist,
wobei bei in generatorischer Betriebsart betriebenem Motor Energiefluss vom Motor zum Energiespeicher vorgesehen ist,
wobei bei in motorischer Betriebsart betriebenem Motor Energiefluss vom Energiespeicher zum Motor vorgesehen ist,
wobei der Energiefluss aus dem Energiespeicher zu im Wesentlichen mindestens zwei Verbrauchern und/oder Speichern jeweils unabhängig derart gesteuert wird, dass
- solange die Energiemenge im Energiespeicher unterhalb der kritischen Energiemenge ist, nur höchstens einem ersten der beiden Verbraucher und/oder Speicher Energiefluss zugeleitet wird,
nach Überschreitung einer kritische Energiemenge im Energiespeicher beiden Verbrauchern und/oder Speichern Energiefluss zugeleitet wird, wobei der zum ersten Verbraucher zugeleitete Energiefluss größer ist als vor Überschreitung der kritischen Energiemenge, für zumindest solange wie die Temperatur des ersten Verbrauchers und/oder der Modellwert für
die Temperatur des ersten Verbrauchers unter einem kritischen Wert bleibt. Die zugehörigen Vorteile wurden obenstehend schon genannt.

Weitere Vorteile ergeben sich aus den Unteransprüchen.

Bei der hier vorliegenden Erfindung ist der Verbraucher auch alternativ derart zu verstehen, dass ihm ein Energiespeicher zugeschaltet ist oder er als Energiespeicher ausgeführt ist. Beispielsweise kann dem Bremswiderstand noch ein Kondensator parallel geschaltet werden, der ebenfalls Energie des Zwischenkreises aufnimmt - zumindest bis zu seiner Kapazitätsgrenze. Auch der Bremsspule könnte ein Energiespeicher parallel zugeschaltet sein, der erst ab einer gewissen Strommenge oder Temperatur befüllt wird. Diese zugeschalteten Energiespeicher werden dann wieder über die Bremsspule beziehungsweise den Bremswiderstand entleert, während derjenigen Betriebszeit, in welcher die Energie im Energiespeicher des Zwischenkreises unterhalb des kritischen Wertes liegt.

### Bezugszeichenliste

3~ Drehstromnetz
U_z Zwischenkreisspannung
C1 Zwischenkreiskondensator
M Motor, versorgt aus drei Leistungshalbleiter-Halbbrücken
V1 Verbraucher 1
V2 Verbraucher 2
I(V1) Strom durch Verbraucher 1
I(V2) Strom durch Verbraucher 2
Temp(V1) Modellwert für Temperatur des V1
Temp(V2) Modellwert für Temperatur des V2
Modell(V1) technische Parameter von V1
Modell(V2) technische Parameter von V2
S1 Schalter, insbesondere Leistungshalbleiterschalter (Brems-Chopper)
S2 Schalter, insbesondere Leistungshalbleiterschalter (Brems-Chopper)
ST1 Ansteuerungsschaltung für S1
ST2 Ansteuerungsschaltung für S2

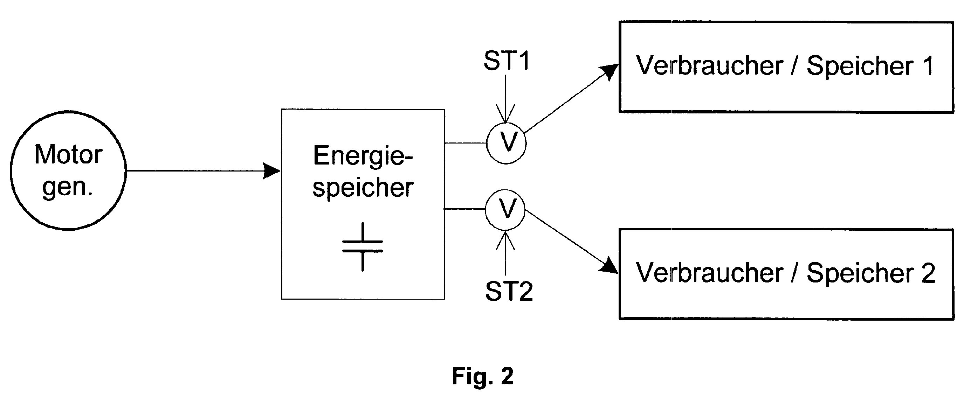

Die Erfindung wird nun anhand von Abbildungen näher erläutert:
Wie in Figur 2 dargestellt ist, betrifft die Erfindung einen Antrieb, umfassend zumindest einen Motor und einen Energiespeicher, wie beispielsweise einen Zwischenkreiskondensator eines den Motor versorgenden Umrichters. Wesentlich ist nun bei der Erfindung, dass Energiefluss aus dem Energiespeicher mindestens zwei Verbrauchern und/oder Speichern jeweils unabhängig gesteuert zuführbar ist. Dabei ist der Motor in generatorischer Betriebsweise derart betrieben, dass Energiefluss vom Motor zum Energiespeicher fließt. Der Energiespeicher hat ein maximales Fassungsvermögen. Energie ist aus dem Energiespeicher an die mindestens zwei Verbraucher und/oder Speicher gesteuert abführbar, insbesondere ab dem Zeitpunkt, wenn die Energie des Energiespeichers eine kritische Energiemenge überschreitet. Auf diese Weise ist dann die Energiemenge im Energiespeicher verringerbar bis auf ein gewünschtes Maß. Sobald der Motor wieder in motorischer Betriebsart betrieben wird, fließt ein entsprechender Energiefluss vom Energiespeicher an den Motor.

Dabei ist zu beachten, dass der Energiespeicher auch einen Energiefluss von einem versorgenden elektrischen Netz haben kann, insbesondere abhängig von der vorhandenen Energiemenge im Energiespeicher. Beispielsweise fließt bei motorischem Betrieb ein derart großer Energiefluss vom versorgenden Netz zum Energiespeicher, dass er im Wesentlichen dem an den Motor abfließenden Energiefluss gleicht.

Unwesentliche Verbraucher, wie Versorgung von elektronischen Steuerungen, Netzteilen und Herstellung von Versorgungsspannungen bleiben bei der vorliegenden Beschreibung unerwähnt.

Bei einem weiteren erfindungsgemäßen Ausführungsbeispiel ist einer der Verbraucher und/oder Speicher derart betrieben, dass er bei allen Betriebsarten des Motors, also auch generatorische und motorische Betriebsart, dauerhaft zumindest eine Mindestmenge an Energiefluss an ihn abführbar ist. Nach Überschreiten einer kritischen Energiemenge im Energiespeicher wird dann diesem Verbraucher und/oder Speicher 1 mehr Energiefluss zugeführt. Zusätzlich wird dem zweiten Verbraucher und/oder Speicher 2 Energiefluss zugeführt.

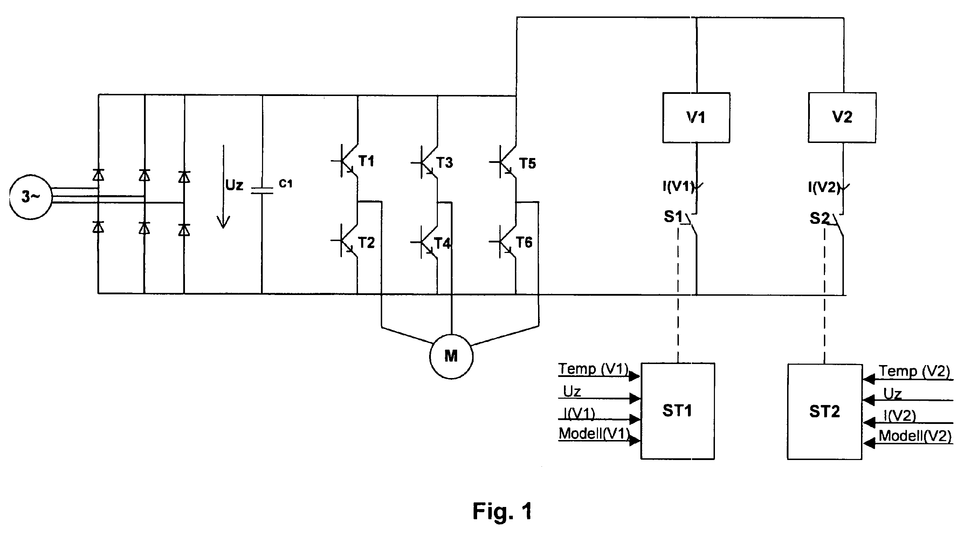

Ein weiteres erfindungsgemäßes Ausführungsbeispiel ist in Figur 1 dargestellt, wobei einem aus dem Drehstromnetz 3~ versorgten Zwischenkreisumrichter die Schalter S1 und S2 zugeordnet sind. Diese sind als Leistungshalbleiterschalter ausgeführt, wie beispielsweise IGBT, und sind auch als Brems-Chopper bezeichenbar.

Der vom Umrichter umfasste Energiespeicher ist als Zwischenkreis-Kondensator C1 vorgesehen. Der Zwischenkreis-Kondensator C1 wird über den dreiphasigen Gleichrichter aus dem Drehstromnetz 3~ gespeist.

Aus dem Zwischenkreis wird der Elektromotor über die drei Halbbrücken von Leistungshalbleitern umfassende Endstufe des Umrichters versorgt.

Eine elektronische Steuer- und Regelschaltung erzeugt die Ansteuersignale für die Leistungshalbleiter der Endstufe. Diese Schaltung umfasst auch weitere Ansteuerschaltungen ST1 und ST2, welche die Ansteuersignale für die Schalter S1 und S2 jeweils erzeugen. Auf diese Weise ist der Energiefluss aus dem Zwischenkreis zu den Verbrauchern V1 und V2 steuerbar.

Die Auslösung der jeweiligen Brems-Chopper kann sowohl gleichzeitig, als auch getrennt von den Ansteuerungsschaltungen ST1 und ST2 jeweils erfolgen. Dazu erzeugen die Steuerschaltungen ST1 Und ST2 entsprechende Ansteuer-Signalspannungen, die den Schaltern S1 und S2 jeweils an ihre Steuereingänge zugeführt werden. Der Strom I(V1) des Verbrauchers V1 und der Strom I(V2) des Verbrauchers V2 wird erfasst und die Messwerte den Ansteuerungsschaltungen ST1 und ST2 zugeführt und von diesen bei der Steuerung und/oder Regelung berücksichtigt.

Die Ansteuerung der Schalter S1 und S2 ist von den Parametern Zwischenkreisspannung Uz, Temperatur und Art der Verbraucher, sowie dem jeweiligen Strom I in den Verbrauchern V1 und V2 abhängig. Zur Bestimmung eines Modellwertes für die Temperatur Temp(V1) des Verbrauchers V1 und eines Modellwertes für die Temperatur Temp(V2) des Verbrauchers V2 werden die jeweiligen technischen Parameter von V1 und technischen Parameter von V2 berücksichtigt, was in Figur 1 durch Modell(V1) beziehungsweise Modell(V2) gekennzeichnet ist.

Damit ist es nun ermöglicht, einen ständigen Verbraucher, wie beispielsweise die Bremsspule einer elektromagnetisch betätigbaren Bremse, parallel mit einem weiteren Verbraucher zu betreiben, also beispielsweise einen für den generatorischen Umrichterbetrieb geeigneten Bremswiderstand.

Bei weiteren erfindungsgemäßen Ausführungsbeispielen ist der Verbraucher als Energiespeicher ausgeführt oder mit einem zusätzlichen Energiespeicher verbunden.

Bei dem weiteren erfindungsgemäßen Ausführungsbeispiel wird der ständige Verbraucher, also beispielsweise die Bremsspule, auch bei motorischem Umrichterbetrieb angesteuert, um seine Funktion zu erhalten. Die Ansteuerweise ist vorzugsweise ein pulsweitenmodulierter Betrieb. Die zugehörige Pulsweitenmodulationsfrequenz beträgt beispielsweise 4, 8, 12 oder 16 kHz. Bei generatorischem Umrichterbetrieb wird die effektive Betriebsspannung am Verbraucher durch die von der Ansteuerschaltung vorgebbare und veränderbare Pulsweite erhöht, um die abzuführende Leistung zu erhöhen.

Dies erfolgt jedoch nur innerhalb der möglichen physikalischen Grenzen, die insbesondere durch die maximal zulässige Betriebstemperatur des Verbrauchers gegeben sind. Die Bremsspule wird also nach Erreichen der für sie maximal zulässigen Temperatur nicht mehr zum zusätzlichen Abführen von Energie aus dem Zwischenkreis verwendet sondern es wird nur noch die notwendige Bestromung zur Aufrechterhaltung ihrer Funktion ausgeführt, nämlich für das Lüften der Bremse.

Der Verbraucher, dem nur im generatorischen Betrieb Energiefluss zugeführt wird, wird zur Entlastung des anderen, ständig bestromten Verbrauchers eingesetzt. Die durch die gesteuerte Pulsweite definierte, effektive Betriebsspannung dieses Verbrauchers ist derart geeignet zu stellen, dass sich eine Energieflussverteilung ergibt, die einen sicheren und dauerhaften Betrieb für alle Komponenten gewährleistet.

Bei einem weiteren erfindungsgemäßen Ausführungsbeispiel umfasst die elektronische Schaltung des Umrichters die Ansteuerungsschaltungen ST1 und ST2 für die Brems-Chopper. Somit ist die gesamte Steuerelektronik sogar im Gehäuse des Umrichters, insbesondere sogar auf einer Leiterplatte, ausführbar, wodurch weitere Gehäuse und Verbindungsteile einsparbar sind.

## Patentansprüche

1. Antrieb, umfassend zumindest einen Motor, zumindest einen Energiespeicher und mindestens zwei mit diesem Energiespeicher verbundenen Verbrauchern und/oder Speichern,
wobei der Motor in zumindest generatorischer oder motorischer Betriebsart betreibbar ist,
wobei bei in generatorischer Betriebsart betriebenem Motor Energiefluss vom Motor zum Energiespeicher vorgesehen ist,
wobei bei in motorischer Betriebsart betriebenem Motor Energiefluss vom Energiespeicher zum Motor vorgesehen ist,
**dadurch gekennzeichnet, dass**
Energiefluss aus dem Energiespeicher im Wesentlichen mindestens zwei Verbrauchern und/oder Speichern jeweils unabhängig gesteuert zuführbar ist"
wobei ein Zwischenkrelskondensator als Energiespeicher vorgesehen ist,
wobei ein erster Verbraucher ein Bremswiderstand ist,
wobei ein zweiter Verbraucher eine Bremsspule ist,
wobei die Bremsspule derart gestaltet ist und der der Bremsspule zugeordnete Schalter pulsweitenmoduliert betreibbar ist von einer derartigen Ansteuerschaltung, dass der an die Bremse zum Lüften der Bremse zugeführte Energiefluss nach Überschreitung einer kritische Energiemenge im Energiespeicher erhöhbar ist.

2. Antrieb nach mindestens einem der vorangegangenen Ansprüche,
**dadurch gekennzeichnet, dass**
Bremswiderstand und Bremsspule über jeweilige Schalter S1, S2 aus dem Zwischenkreiskondensator versorgbar sind.

3. Antrieb nach mindestens einem der vorangegangenen Ansprüche,
**dadurch gekennzeichnet, dass**
die Ansteuersignale für die Schalter von Ansteuerschaltungen ST1, ST2 erzeugbar sind,
wobei
- technische Parameter des jeweiligen Verbrauchers
- und Messwerte des Stromes durch den jeweiligen Verbraucher berücksichtigbar sind
- und/oder ein bestimmter Modellwert für Temperatur des Verbrauchers bildbar und/oder berücksichtigbar ist.

4. Antrieb nach mindestens einem der vorangegangenen Ansprüche,
**dadurch gekennzeichnet, dass**
der Antrieb als Umrichtermotor ausgeführt ist, wobei der Bremswiderstand innerhalb des Umrichtermotors vorgesehen ist und seine Wärme über das Motorgehäuse an die Umgebung abführbar ist.

5. Antrieb nach mindestens einem der Ansprüche 1 bis 5,
**dadurch gekennzeichnet, dass**
der Antrieb als Umrichtermotor ausgeführt ist, wobei der Bremswiderstand außerhalb des Umrichtermotors vorgesehen ist.

6. Antrieb nach mindestens einem der vorangegangenen Ansprüche,
**dadurch gekennzeichnet, dass**
der Elektromotor als Asynchronmotor oder als Synchronmotor ausgeführt ist.

7. Verfahren zum Steuern des Energieflusses bei einem Antrieb, umfassend zumindest einen Motor, zumindest einen Energiespeicher und mindestens zwei mit diesem Energiespeicher verbundenen Verbrauchern und/oder Energiespeichern,
wobei der Motor in zumindest generatorischer oder motorischer Betriebsart betreibbar ist,
wobei bei in generatorischer Betriebsart betriebenem Motor Energiefluss vom Motor zum Energiespeicher vorgesehen ist,
wobei bei in motorischer Betriebsart betriebenem Motor Energiefluss vom Energiespeicher zum Motor vorgesehen ist,
**dadurch gekennzeichnet, dass**
der Energiefluss aus dem Energiespeicher zu im Wesentlichen mindestens zwei Verbrauchern und/oder Speichern jeweils unabhängig derart gesteuert wird, dass
- solange die Energiemenge im Energiespeicher unterhalb der kritischen Energiemenge ist, nur höchstens einem ersten der beiden Verbraucher und/oder Speicher Energiefluss zum Lüften einer Bremse zugeleitet wird,
- nach Überschreitung einer kritische Energiemenge im Energiespeicher beiden Verbrauchern und/oder Speichern Energiefluss zugeleitet wird, wobei der zum ersten Verbraucher zugeleitete Energiefluss größer ist als vor Überschreitung der kritischen Energiemenge zum Lüften der Bremse notwendig, für zumindest solange wie die Temperatur des ersten Verbrauchers und/oder der Modellwert für die Temperatur des ersten Verbrauchers unter einem kritischen Wert bleibt.

## Claims

1. A drive, comprising at least one motor, at least one energy storage device and at least two consumers and/or accumulators connected to this energy storage device, wherein the motor can be operated in at least a generator or motor mode of operation, wherein in the case of a motor operated in a generator mode of operation, energy flow from the motor to the energy storage device is provided, wherein in the case of a motor operated in a motor mode of operation, energy flow from the energy storage device to the motor is provided, **characterised in that** energy flow from the energy storage device can be supplied [to] substantially at least two consumers and/or accumulators, with independent control of the supply in each case, wherein an intermediate-circuit capacitor is provided as an energy storage device, wherein a first consumer is a braking resistor, wherein a second consumer is a brake coil, wherein the brake coil is configured in such a manner and the switch, associated with the brake coil, can be operated in a pulse width modulated manner by a control circuit of the type such that the energy flow supplied to the brake to release the brake can be increased after a critical energy quantity in the energy storage device has been exceeded.

2. A drive according to at least one of the preceding claims, **characterised in that** the braking resistor and the brake coil can be supplied from the intermediate-circuit capacitor via respective switches S1, S2.

3. A drive according to at least one of the preceding claims, **characterised in that** the control signals for the switches can be generated by control circuits ST1, ST2, wherein
- technical parameters of the respective consumer
- and measured values of the current through the respective consumer can be taken into account
- and/or a specific model value for temperature of the consumer can be formed and/or taken into account.

4. A drive according to at least one of the preceding claims, **characterised in that** the drive is in the form of a converter motor, wherein the braking resistor is provided within the converter motor and its heat can be led away to the surroundings via the motor housing.

5. A drive according to at least one of claims 1 to 5, **characterised in that** the drive is in the form of a converter motor, wherein the braking resistor is provided outside of the converter motor.

6. A drive according to at least one of the preceding claims, **characterised in that** the electric motor is in the form of an asynchronous motor or a synchronous motor.

7. A method of controlling the energy flow in the case of a drive, comprising at least one motor, at least one energy storage device and at least two consumers and/or energy storage devices connected to this energy storage device, wherein the motor can be operated in at least a generator or motor mode of operation, wherein in the case of a motor operated in a generator mode of operation, energy flow from the motor to the energy storage device is provided, wherein in the case of a motor operated in a motor mode of operation, energy flow from the energy storage device to the motor is provided, **characterised in that** the energy flow from the energy storage device to substantially at least two consumers and/or accumulators is in each case controlled independently in such a manner that
- as long as the energy quantity in the energy storage device is below the critical energy quantity, energy flow to release a brake is only fed to at most a first of the two consumers and/or accumulators,
- energy flow is fed to both consumers and/or accumulators after a critical energy quantity in the energy storage device has been exceeded, wherein the energy flow fed to the first consumer is greater than is necessary to release the brake before the critical energy quantity is exceeded, for at least as long as the temperature of the first consumer and/or the model value for the temperature of the first consumer remains below a critical value.

## Revendications

1. Entraînement, comprenant au moins un moteur, au moins un accumulateur d'énergie et au moins deux consommateurs et/ou accumulateurs reliés à cet accumulateur d'énergie,
le moteur pouvant fonctionner au moins dans un mode de fonctionnement générateur ou dans un mode de fonctionnement moteur,
un flux d'énergie du moteur vers l'accumulateur d'énergie étant prévu lorsque le moteur fonctionne en mode générateur,
un flux d'énergie de l'accumulateur d'énergie vers le moteur étant prévu lorsque le moteur fonctionne en mode moteur,
**caractérisé en ce que**
un flux d'énergie provenant de l'accumulateur d'énergie peut être amené essentiellement à au moins deux consommateurs et/ou accumulateurs d'une manière commandée indépendamment dans chaque cas,
un condensateur de circuit intermédiaire étant prévu comme accumulateur d'énergie,
un premier consommateur étant une résistance de freinage,
un deuxième consommateur étant une bobine de freinage,
la bobine de freinage étant conçue de telle façon et le commutateur associé à la bobine de freinage pouvant être commandé par modulation d'impulsions en largeur par un tel circuit de commande que le flux d'énergie amené au frein pour ouvrir le frein puisse être élevé après dépassement d'une quantité d'énergie critique dans l'accumulateur d'énergie.

2. Entraînement selon au moins une des revendications précédentes,
**caractérisé en ce que**
la résistance de freinage et la bobine de freinage peuvent être alimentées à partir du condensateur de circuit intermédiaire via des commutateurs respectifs S1, S2.

3. Entraînement selon au moins une des revendications précédentes,
**caractérisé en ce que**
les signaux de commande pour les commutateurs peuvent être générés par des circuits de commande ST1, ST2, sachant que
- des paramètres techniques du consommateur respectif
- et des valeurs mesurées du courant à travers le consommateur respectif peuvent être pris en compte
- et/ou une certaine valeur de modèle pour la température du consommateur peut être formée et/ou prise en compte.

4. Entraînement selon au moins une des revendications précédentes,
**caractérisé en ce que**
l'entraînement est réalisé sous forme de moteur à variateur, la résistance de freinage étant prévue à l'intérieur du moteur à variateur et sa chaleur pouvant être dissipée dans l'environnement via le carter du moteur.

5. Entraînement selon au moins une des revendications 1 à 5,
**caractérisé en ce que**
l'entraînement est réalisé sous forme de moteur à variateur, la résistance de freinage étant prévue à l'extérieur du moteur à variateur.

6. Entraînement selon au moins une des revendications précédentes,
**caractérisé en ce que**
le moteur électrique est réalisé sous forme de moteur asynchrone ou de moteur synchrone.

7. Procédé pour commander le flux d'énergie sur un entraînement comprenant au moins un moteur, au moins un accumulateur d'énergie et au moins deux consommateurs et/ou accumulateurs d'énergie reliés à cet accumulateur d'énergie,
le moteur pouvant fonctionner au moins dans un mode de fonctionnement générateur ou dans un mode de fonctionnement moteur,
un flux d'énergie du moteur vers l'accumulateur d'énergie étant prévu lorsque le moteur fonctionne en mode générateur,
un flux d'énergie de l'accumulateur d'énergie vers le moteur étant prévu lorsque le moteur fonctionne en mode moteur,
**caractérisé en ce que**
le flux d'énergie allant de l'accumulateur d'énergie à essentiellement au moins deux consommateurs et/ou accumulateurs est commandé indépendamment dans chaque cas de façon que
- tant que la quantité d'énergie dans l'accumulateur d'énergie est inférieure à la quantité d'énergie critique, un flux d'énergie pour ouvrir un frein n'est amené tout au plus qu'à un premier des deux consommateurs et/ou accumulateurs,
- après dépassement d'une quantité d'énergie critique dans l'accumulateur d'énergie un flux d'énergie est amené aux deux consommateurs et/ou accumulateurs, le flux d'énergie amené au premier consommateur étant supérieur à celui nécessaire pour ouvrir le frein avant dépassement de la quantité d'énergie critique, au moins aussi longtemps que la température du premier consommateur et/ou la valeur de modèle pour la température du premier consommateur reste au-dessous d'une valeur critique.
